# FASCICULE DE BREVET EUROPEEN

(11) **EP 1 015 945 B1**
(45) Date de publication et mention de la délivrance du brevet: **19.12.2001**
(21) Numéro de dépôt: 98952824.5
(22) Date de dépôt: 30.10.1998
(51) Int. Cl.: G05B 19/042, G09F 25/00

(54) **DISPOSITIF D'ANIMATION POUR REPRESENTATIONS GRAPHIQUES OU PLASTIQUES**
ANIMATIONSVORRICHTUNG FÜR GRAPHISCHE ODER PLASTISCHE DARSTELLUNGEN
ANIMATION DEVICE FOR GRAPHIC OR PLASTIC REPRESENTATIONS

(30) Priorité: 03.11.1997 FR 9713788
(43) Date de publication de la demande: 05.07.2000
(73) Titulaire: Van Laethem, Jean-Marc, 75014 Paris (FR)
(72) Inventeur: Van Laethem, Jean-Marc, 75014 Paris (FR)
(74) Mandataire: Colas, Jean-Pierre
(86) Numéro de dépôt international: FR9802328
(87) Numéro de publication internationale: WO9923540

(56) Documents cités:
- EP-A- 0 139 876
- GB-A- 2 146 821
- US-A- 4 930 236
- US-A- 5 305 197
- US-A- 5 532 680

## Description

La présente invention concerne un dispositif d'animation pour représentations graphiques ou plastiques, ainsi qu'un système en comportant application.

Il existe différents systèmes permettant de présenter des images sur un même support, tels ceux utilisés dans certains panneaux publicitaires. L'un de ces systèmes présente, pendant un temps déterminé, une affiche publicitaire initialement enroulée autour des montants inférieurs et supérieurs du support du panneau. Un autre système présente, pendant un temps déterminé, une affiche publicitaire composée par la juxtaposition de bandes verticales, ces bandes étant fixées sur chacun des côtés de multiples éléments profilés en triangle. Il est ainsi possible d'afficher trois images différentes de manière successive.

Ces dispositifs ne permettent que d'afficher, par intermittence, des images statiques, pendant un temps préalablement défini, ce qui a tendance à réduire, à termes, l'impact du message publicitaire. De plus, le mouvement n'est utilisé que pour passer d'une image à l'autre le plus rapidement possible, ce qui a tendance à frustrer l'observateur s'il n'a pas terminé d'observer l'image ou de lire le message en cours.

Le brevet US-A-5 305 197 décrit un dispositif d'animation correspondant au préambule de la revendication 1.

L'invention a pour but, entre autre, de remédier au phénomène de lassitude d'observation d'une représentation graphique ou plastique au moyen d'un dispositif d'animation susceptible de créer un effet de surprise et de variété.

A cet effet, l'invention à pour objet un dispositif d'animation correspondant à celui défini far la revendication 1.

L'invention a également pour objet un dispositif d'animation selon la revendication 1 présentant en outre les caractéristiques suivantes, considérées seules ou en combinaison :
- le capteur pour détecter la présence d'un individu comprend des moyens de mesure de la distance d'un individu détecté auxdits moyens de support ;
- ledit capteur est un capteur à ultra-son ;
- le dispositif comprend une pluralité de capteurs, des moyens pour générer plusieurs paramètres en fonction des signaux délivrés par lesdits capteurs, et des moyens pour générer une variable d'état en cours dudit dispositif en fonction desdits paramètres et de la variable aléatoire, les moyens de commande commandant lesdits moyens d'animation en fonction de ladite variable d'état en cours ;
- lesdits capteurs comprennent l'un au moins d'un capteur de luminosité et d'un capteur sonore adaptés respectivement pour mesurer la luminosité ambiante et détecter des sons dans un champ dans lequel est placé ledit dispositif ;
- lesdits moyens de commande comprennent des moyens de mémorisation d'une liste prédéfinie de variables d'états, lesdits moyens de commande étant adaptés pour commander sélectivement lesdits moyens d'animation en fonction de la présence ou de l'absence de ladite variable d'état en cours dans ladite liste ;
- lesdits moyens de commande comprennent des moyens pour produire une séquence prédéfinie d'animation desdits moyens d'animation en fonction de ladite variable d'état et pour moduler sélectivement le déroulement de ladite séquence d'animation en fonction d'au moins une variable aléatoire ;
- lesdits moyens de commande comprennent des moyens pour commander sélectivement l'interruption d'une séquence d'animation en cours en réponse à une variation de ladite variable d'état ;
- lesdits moyens de commande sont adaptés pour commander lesdits moyens d'animation en fonction du temps depuis lequel lesdits moyens d'animation sont placés dans une configuration donnée ;
- lesdits moyens de support comprennent au moins un support fixe d'une représentation graphique d'arrière-plan et au moins un support mobile d'une représentation graphique de premier plan, et lesdits moyens d'animation comprennent des moyens de déplacement dudit support mobile de représentation de premier plan par rapport audit support fixe de représentation d'arrière-plan ;
- lesdits moyens de support comprennent un écran d'affichage d'image vidéo et lesdits moyens d'animation comprennent des moyens de traitement de ladite image vidéo.

Le dispositif selon l'invention permet d'animer ou de moduler certaines parties d'une représentation graphique ou plastique, et ceci de manière interactive, c'est à dire en fonction de paramètres d'environnement mesurés à l'aide de capteurs électroniques. De plus, le dispositif selon l'invention induit un élément aléatoire dans le choix des animations ainsi que dans le déroulement des animations elles-mêmes. La prise en compte d'une variable aléatoire dans le choix et le déroulement d'une animation permet de susciter et de maintenir l'intérêt d'un observateur car cela fait appel à sa curiosité. L'observateur s'interroge et essayer d'identifier quels événements, ou combinaisons d'événements, ont une influence sur l'animation en cours. De plus, le fait que l'animation soit rendue non déterministe par la variable aléatoire permet d'entretenir l'effet de surprise et de variété car les même situations peuvent produire des effets sensiblement différents. Enfin, cela permet aussi de réduire l'aspect mécanique, ou robotique, d'une animation tout en renforçant les aspects esthétiques car l'observateur semble percevoir une "intelligence" au-delà d'un simple robot ou automate.

Selon l'invention, la représentation graphique ou plastique évolue ainsi en fonction des réactions de l'observateur. Le dispositif permet ainsi d'impliquer personnellement et directement l'observateur dans la communication établie par la représentation graphique ou plastique et d'établir ainsi une réelle communication réciproque avec l'observateur. Un autre avantage du dispositif est qu'il permet de présenter de multiples variantes d'une représentation graphique ou plastique, entretenant ainsi la variété et la surprise et évitant le phénomène de lassitude d'observation.

L'invention a également pour objet un système d'animation de représentations graphiques ou plastiques comprenant plusieurs dispositifs d'animation tels que définis ci-dessus, des moyens de communication entre lesdits dispositifs, et des moyens pour commander les moyens d'animation d'au moins une partie desdits dispositifs en fonction de l'état des moyens de commande d'au moins l'un desdits dispositifs.

L'invention sera mieux comprise à la lumière des dessins annexés sur lesquels:
La figure 1 est une vue en plan de la face avant d'un élément d'une représentation graphique animée par un dispositif selon une première forme de réalisation de l'invention ;
La figure 2 est une vue en plan de la face arrière de l'élément de représentation graphique de la figure 1 ;
La figure 3 est une vue en coupe selon la ligne 3-3 du système de déplacement en translation utilisé dans le dispositif selon la première forme de réalisation de l'invention ;
La figure 4 est un schéma synoptique d'un système électronique de commande du dispositif selon la première forme de réalisation de l'invention des figures 1 à 3 ;
La figure 5 est un schéma synoptique du système de commande électronique d'un dispositif selon une seconde forme de réalisation de l'invention ;
La figure 6 est un schéma illustrant la manière dont le dispositif selon l'invention change d'état en fonction de mesures réalisées à l'aide de capteurs et d'une variable aléatoire ;
La figure 7 est un organigramme présentant les trois processus nécessaires à la mise en oeuvre du dispositif d'animation selon l'invention ;
La figure 8 est un organigramme illustrant la manière dont une variable aléatoire est introduite dans le choix de la séquence d'animation à réaliser ;
La figure 9 est un organigramme illustrant la manière dont une variable aléatoire est introduite dans le déroulement de la séquence d'animation en cours ; et
La figure 10 est une organigramme illustrant la manière dont les actionneurs sont asservis dans la première forme de réalisation de l'invention des figures 1 à 3.

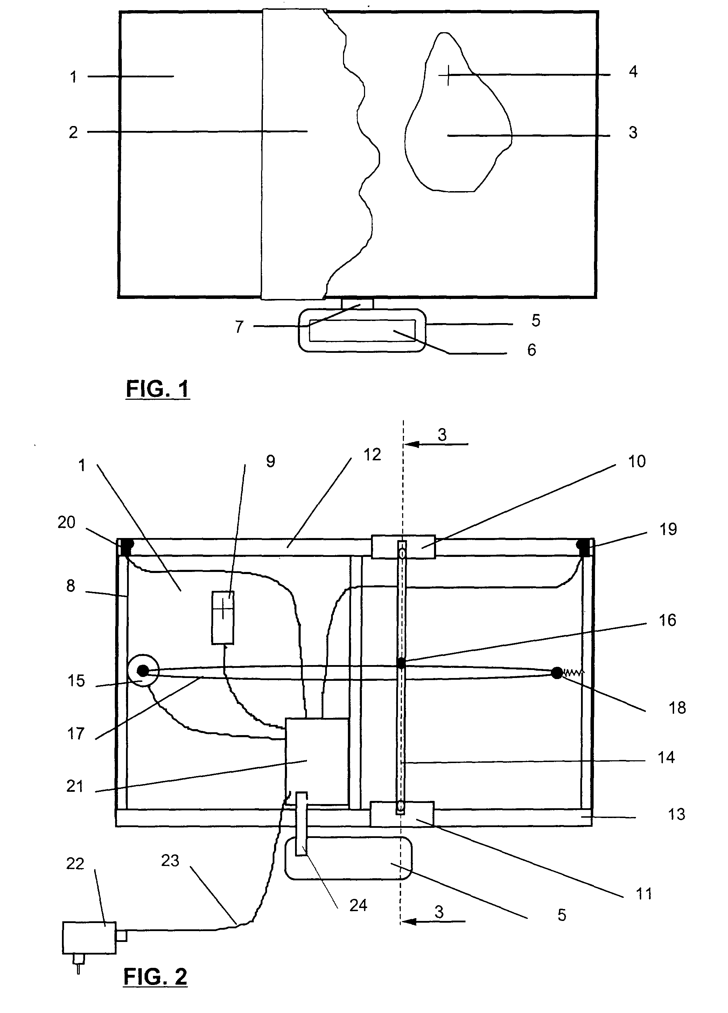

En se référant aux figures 1 à 3, un dispositif d'animation selon une première forme de réalisation de l'invention comporte un support fixe de représentation graphique d'arrière plan 1 de forme générale rectangulaire, un premier support mobile de représentation graphique de premier plan 2 pouvant se déplacer parallèlement aux bords supérieur et inférieur du support de représentation graphique d'arrière plan 1, et un deuxième support de représentation graphique de premier plan 3 pouvant se mouvoir par rotation autour d'un axe de rotation 4. Le support de représentation graphique d'arrière plan 1 peut être constitué par une toile peinte, une photo, ou tout autre type de représentation graphique ou picturale.

Les distances entre le support de représentation graphique d'arrière plan 1 et les différents supports de représentation graphique mobiles de premier plan 2 et 3 sont définies de façon à ce que les éléments en mouvement peuvent se chevaucher sans gêner leurs courses respectives.

Le support de représentation graphique d'arrière plan 1 est supporté par un châssis rectangulaire 8 assurant la rigidité de l'ensemble.

Dans la forme de réalisation selon la figure 1, un boîtier 5 regroupant différents capteurs électroniques est fixé par une patte de fixations 7 au côté arrière du bord inférieur du châssis 8 supportant le support de représentation graphique 1. Une ouverture 6 dans le boîtier 5 permet aux capteurs électroniques de réagir aux effets de la présence d'un observateur.

Selon une première forme de réalisation de l'invention illustrée par la figure 2, un moteur électrique 9 permet le mouvement de rotation de l'élément mobile 3 autour de l'axe 4 directement par le biais de son rotor ou après réduction à l'aide d'un système à poulies ou à engrenages.

Les parties supérieures et inférieures de l'élément mobile 2 se déplaçant en translation sont fixées sur des profilés en U 10 et 11 glissant respectivement sur des cornières 12 et 13 fixées sur les montants supérieur et inférieur du châssis 8.

Les profilés en U 10 et 11 sont rendus solidaires par une tringle 14 reliée au moteur 15 par le biais d'un point d'attache 16 et d'une courroie de transmission 17. La courroie de transmission 17 est maintenue tendue entre le moteur 15 et une poulie par un ressort en extension 18.

Des interrupteurs de fin de course 19 et 20 permettent de détecter la fin de course de l'élément mobile 2 dans ses positions extrêmes, suite à une buté du profilé en U 10 sur ceux-ci. Ces interrupteurs de fin de course 19 et 20 peuvent être réalisés à l'aide de contacts mécaniques ou magnétiques. Dans ce dernier cas, les aimants permettant d'établir le contact électrique sont fixés sur un des profilés en U 10 du support mobile.

Un circuit imprimé électronique 21 comprend des circuits électroniques de traitement de signaux, de commande, de régulation des alimentations, ainsi qu'un processeur. Le circuit imprimé 21 est connecté, d'une part aux capteurs regroupés dans le boîtier 5 par le biais d'un câble en nappe 24, d'autre part aux interrupteurs de fin de course 19 et 20 et aux moteurs 9 et 15, et enfin au secteur par le biais d'un adaptateur 22 au secteur et de son cordon 23.

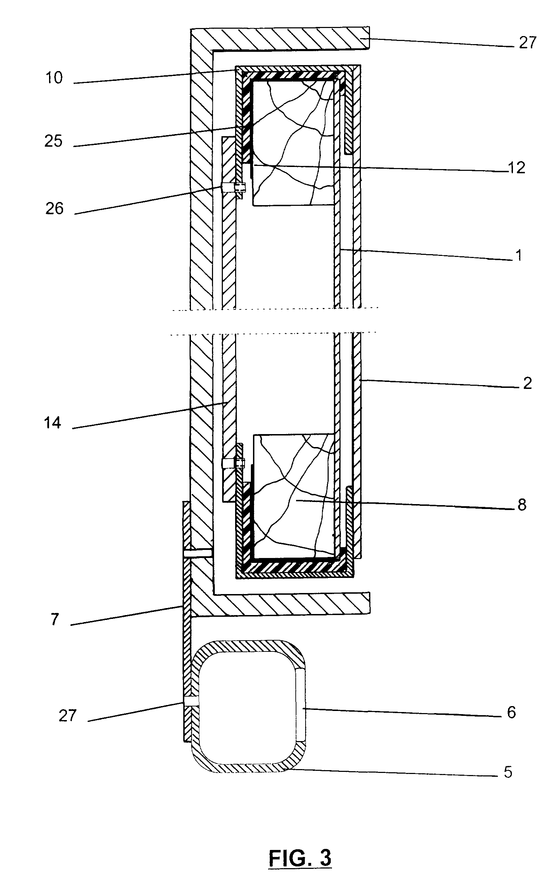

La figure 3 représente en coupe le mécanisme de déplacement en translation utilisé dans le dispositif des figures 1 et 2. Ce mécanisme a pour objet d'assurer un mouvement de glissement à faible friction du support 2 par rapport au support 1. Les profilés en U 10 et 11 sont ajustés pour recouvrir totalement les cornières 12 et 13 respectivement et partiellement la face avant du support de représentation graphique d'arrière-plan 1. L'intérieur des profilés U 10 et 11 est recouvert d'une matière plastique 25 facilitant le glissement entre ceux-ci et les cornières 12 et 13.

La tringle 14 est fixée aux profilés en U 10 et 11 par des vis 26. Le support mobile 2 est fixé sur la face avant des profilés en U 10 et 11.
Dans une variante de réalisation, non représentée, et afin de mouvoir des supports mobiles dont la taille ne couvrirait pas la totalité de la hauteur du support de représentation graphique d'arrière-plan 1, le support mobile 2 peut être maintenu et guidé par un seul profilé en U supérieur 10 ou inférieur 11. Dans une autre variante de réalisation non représentée, le support mobile 2 peut être guidé et maintenu par des profilés en U latéraux, glissant ainsi sur les montants gauche et droite du châssis 8.

Tel que représenté en coupe à la figure 3, l'ensemble du dispositif est placé dans un cadre de type "Système Américain" 27, fixé sur les montants droite et gauche du châssis 8. Le boîtier 5 regroupant les capteurs, dans lequel est ouverte une fenêtre 6, est fixé ici à l'aide de la patte de fixation 7 sur la face arrière du montant inférieur du cadre "Système Américain" 27, et non pas directement sur le châssis 8 comme représenté aux figures 1 et 2.
A la mise sous tension du dispositif, les supports de représentations graphiques mobiles 2 et 3 se déplacent vers leur position de référence. Le profilé en U supérieur 10 entre en contact avec l'interrupteur 19, ce qui détermine la position de référence du support mobile 2. Le circuit électronique de commande, présent sur le circuit imprimé 21, prend en compte les paramètres d'environnement du dispositif à l'aide de capteurs tels que des capteurs de luminosité, de présence et de distance de l'observateur. Le circuit électronique de commande initie et déroule une séquence de mouvements préenregistrés des supports mobiles 2 et 3 en asservissant les moteurs 15 et 9. Le choix de la séquence de mouvements ainsi que le déroulement de la séquence choisie sont fonctions des paramètres d'environnement et d'une variable aléatoire.

Tout changement dans l'environnement tel qu'un mouvement de l'observateur ou un changement de luminosité est pris en compte par les capteurs présents dans le boîtier 5. Le circuit électronique de commande peut interrompre la séquence en cours et en démarrer une nouvelle.

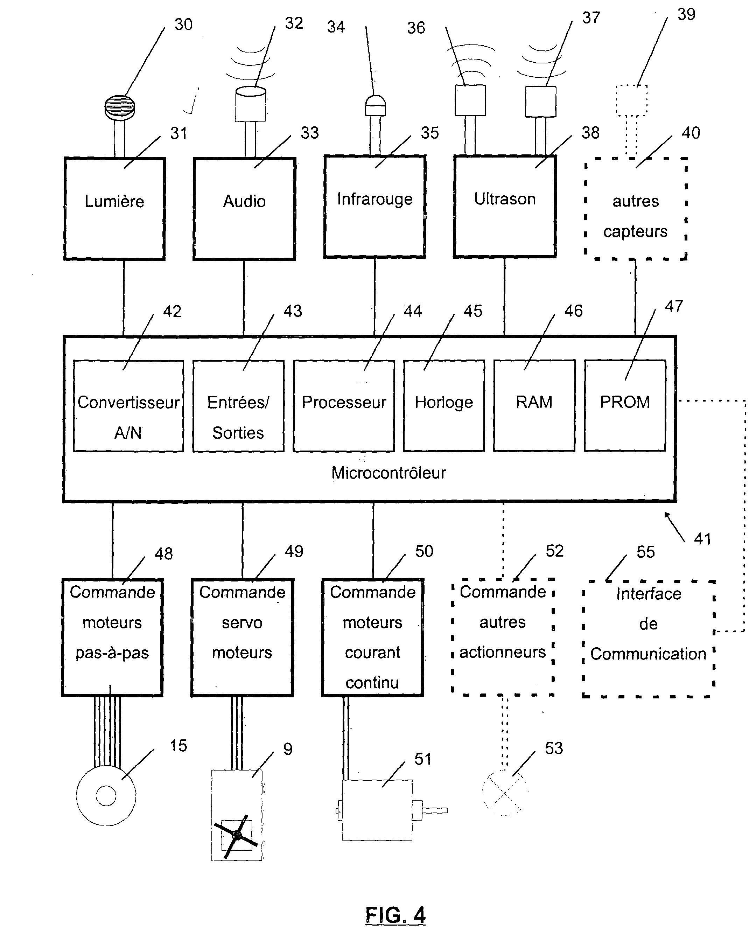

En se référant à la figure 4, le système électronique de commande du dispositif selon la première forme de réalisation de l'invention des figures 1 à 3 est agencé autour d'un microcontrôleur 41 relié a différents capteurs et actionneurs. Le microcontrôleur 41 comprend un processeur 44 cadencé par une horloge 45, une mémoire non volatile de type PROM ou Flash PROM 47 contenant le programme informatique, une mémoire volatile de type RAM 46 contenant les variables, un ou plusieurs convertisseur analogique/numérique 42 ainsi que les entrées/sorties digitales 43 du microcontrôleur 41.

Un capteur de luminosité 30 est connecté au microcontrôleur 41 par l'intermédiaire d'un circuit 31 de traitement du signal de sortie du capteur. Ce circuit de traitement 31 peut être soit un détecteur de seuil soit un circuit amplificateur. Un détecteur de seuil applique à l'entrée du microcontrôleur un signal tout ou rien en fonction d'un seuil de luminosité pré établi. Un circuit amplificateur applique a l'entrée du convertisseur analogique numérique 42 un signal représentatif de la luminosité ambiante.

Un microphone 32 est connecté au microcontrôleur 41 par l'intermédiaire d'un circuit de traitement audio 33. Ce circuit 33 peut être soit un circuit amplificateur, soit un analyseur de spectre, soit un circuit de reconnaissance vocale.

S'il s'agit d'un circuit amplificateur, celui-ci délivre au convertisseur analogique numérique 42 le signal audio amplifié. Ce signal est ensuite échantillonné par le convertisseur analogique numérique 42 à une fréquence double de la plus haute fréquence que l'on désire mesurer.

Dans le cas où le circuit de traitement audio 33 est un analyseur de spectre audio , les sorties du circuit de traitement délivrent des signaux analogiques dont les valeurs sont représentatives des amplitudes du signal audio dans chacune des bandes de fréquences. Ces sorties sont appliqués à plusieurs convertisseurs analogiques numériques afin de délivrer au processeur 44 des valeurs représentatives de l'intensité du signal dans les bandes de fréquences prédéfinies.

Dans le cas où le circuit de traitement du signal audio 33 est un circuit de reconnaissance vocale, les mots à reconnaître sont enregistrées dans un circuit intégré spécialisé à l'aide du microphone 32. Si un mot préalablement enregistré est prononcé par l'observateur, le circuit de reconnaissance vocale active la sortie correspondante au mot prononcé et l'indique au processeur 44.

Un capteur de lumière infrarouge 34 est connecté au microcontrôleur 41 par l'intermédiaire d'un circuit de traitement infrarouge 35. Ce circuit de traitement infrarouge 35 peut être soit un circuit amplificateur soit un circuit décodeur associé à une télécommande infrarouge.

Dans le cas où le circuit de traitement infrarouge 35 est un amplificateur infrarouge, celui-ci délivre au microcontrôleur 41, après filtrage des rayonnement infrarouges ambiants, un signal tout ou rien correspondant au signal infrarouge émis par n'importe quelle télécommande d'appareil audio ou vidéo. Le processeur 44 peut ainsi détecter la présence d'une émission infrarouge par échantillonnage du signal reçu.

Dans le cas où le circuit de traitement infrarouge 35 est un décodeur infrarouge associé à une télécommande infrarouge spécifique livrée avec le dispositif de l'invention, le décodeur infrarouge 35 transmet au microcontrôleur 41 un signal numérique permettant d'identifier la touche enfoncée sur la télécommande spécifique.

Un émetteur ultrasonique 36 associé à un récepteur ultrasonique 37 constitue avec un circuit d'émission / réception ultrasonique 38 un circuit de détection ou mesure de distance de l'observateur. Ce circuit délivre au microcontrôleur 41 un signal représentatif du temps qui s'écoule entre le moment où des impulsions ultrasoniques quittent l'émetteur ultrasonique 36, sont réfléchies par le corps de l'observateur et captées par le récepteur ultrasonique 37.

Dans une variante de réalisation non illustrée, une multiplicité d'émetteurs ultrasoniques 36 et de récepteurs ultrasoniques 37 sont disposés horizontalement sous le montant inférieur de la représentation graphique. Ces récepteurs ultrasoniques 37 permettent de détecter les mouvements de l'observateur, tels son déplacement dans l'espace couvert par les capteurs, mais aussi les gestes de ses bras (bras en croix ou bras étendu en avant).

Le dispositif selon l'invention peut comprendre un ou plusieurs autres capteurs 39, tels qu'un capteur à infrarouge passif, un capteur électrostatique, un capteur thermique ou des capteurs de détection par contact tels que des interrupteurs ou des capteurs de pression. Les circuits de traitement 40 associés à ces autres capteurs 39 peuvent être du type détecteur de seuil délivrant un signal tout ou rien ou bien de type amplificateur associé à un convertisseur-analogique numérique selon le cas.

Selon des variantes de réalisation non illustrées, les différents capteurs permettant de mesurer les effets de la présence de l'observateur ainsi que les paramètres d'environnements peuvent êtres placés directement sur le support de représentation graphique d'arrière-plan 1, ou regroupés dans un cache de profil en L recouvrant partiellement une des extrémités du support de représentation graphique d'arrière-plan 1.

La figure 4 illustre aussi les différent actionneurs pouvant être utilisés dans la première forme de réalisation du dispositif selon l'invention.

Un ou plusieurs moteur pas-à-pas 15 sont connectés au microcontrôleur 41 par le biais d'un circuit 48 de commande de moteurs pas-à-pas. Ce circuit de commande 48 délivre le courant nécessaire à la mise en rotation des moteurs, contrôle leur sens de rotation et délivre les impulsions de pas, donc le nombre de pas à effectuer et la vitesse de rotation de chacun des moteurs pas-à-pas.

Un ou plusieurs servomoteurs 9 sont connectés au microcontrôleur 41 par le biais d'un circuit 49 de commande des servomoteurs 9. Ce circuit de commande 49 délivre aux servomoteurs 9 des impulsions modulées en largeur représentatives de la position que doivent maintenir les servomoteurs ainsi que du courant nécessaire à leur mise en mouvement et maintient en position.

Un ou plusieurs moteurs à courant continu 51 peuvent être connectés au microcontrôleur 41 par le biais d'un circuit 50 de commande de moteurs à courant continu. Ce circuit de commande 50 délivre le courant nécessaire à leur mise en mouvement, et contrôle le sens et la vitesse de rotation.

D'autres actionneurs 53 peuvent être asservis par le microcontrôleur 41, tels que moteurs synchrones, lampes de type diodes électroluminescentes ou à incandescence, diffuseur de parfum ou amplificateur audio associé à un haut parleur délivrant des sons pré-enregistrés. Les circuits de commande 52 de ces autres actionneurs 53 délivrent les signaux et la puissance nécessaires au bon fonctionnement de ceux-ci.

Le fonctionnement du système de commande électronique du dispositif selon la première forme de réalisation décrite ci-dessus sera maintenant décrit.

Si un observateur s 'approche du système, il est détecté par le circuit 38 de mesure de distance de l'observateur qui foumit au microcontrôleur 41 une indication de sa distance. Cette information est combinée avec les valeurs mesurées par les autres capteurs et avec une variable aléatoire générée par le processeur 44 afin de choisir une séquence possible parmi les séquences d'animation stockés dans la mémoire PROM 47. Le processeur 44 interprète et exécute les étapes de la séquence choisie en positionnant les moteurs 15, 9 et 51 à des positions préenregistrées et en modulant des paramètres des mouvements tels que vitesse et délai d'attente en fonction de variables aléatoires. Si l'observateur se rapproche et parle, cette combinaison déclenche une séquence d'animation lui indiquant que sa communication est prise en compte. Ainsi, toute variation des paramètres mesurés à l'aide des capteurs est prise en compte dans le choix des séquences et le déroulement de celles-ci.

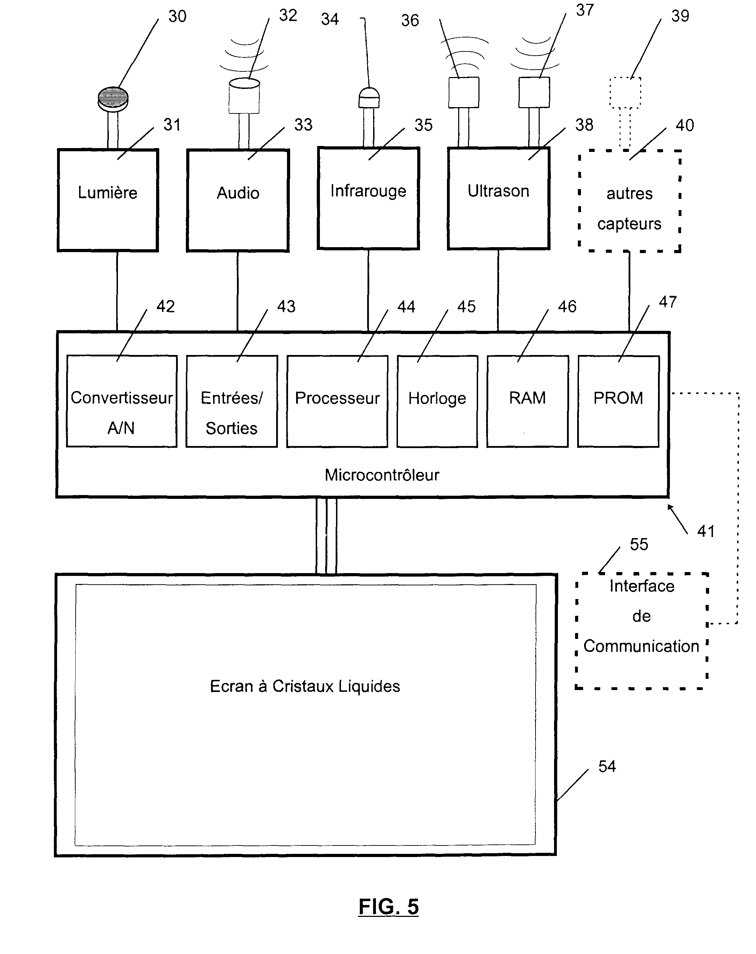

Dans une seconde forme de réalisation de l'invention illustrée en figure 5, le système selon l'invention utilise un écran à cristaux liquides 54 à la place des supports de représentations graphique et/ou picturale d'arrière-plan et de premier plan animés par le biais de moteurs électriques. Dans cette seconde forme de réalisation, le dispositif permet de faire évoluer la totalité ou certaines parties de l'image présentée. Les paramètres de l'image pouvant évoluer en fonction des mesures effectuées à l'aide des capteurs sont, par exemple, la luminosité, le contraste, la saturation des couleurs, mais aussi l'angle de vue de l'image, la position et la couleur de la source de lumière. Dans une telle forme de réalisation, le mouvement d'éléments présents dans l'image peut être induit par fusion, superposition ou déformation de type 'morphing' d'une partie de l'image par une autre.

Dans une troisième forme de réalisation de l'invention, non illustrée, le système selon l'invention est utilisé pour animer certaines parties d'une représentation plastique, telle une sculpture. Dans cette forme de réalisation, le dispositif permet de faire évoluer dans les trois dimensions un ou plusieurs éléments de la représentation plastique. Dans ce cas, l'électronique de commande, les moteurs et les capteurs sont logés dans un ou plusieurs éléments de la représentation plastique ou bien dans un socle solidaire de celle-ci.

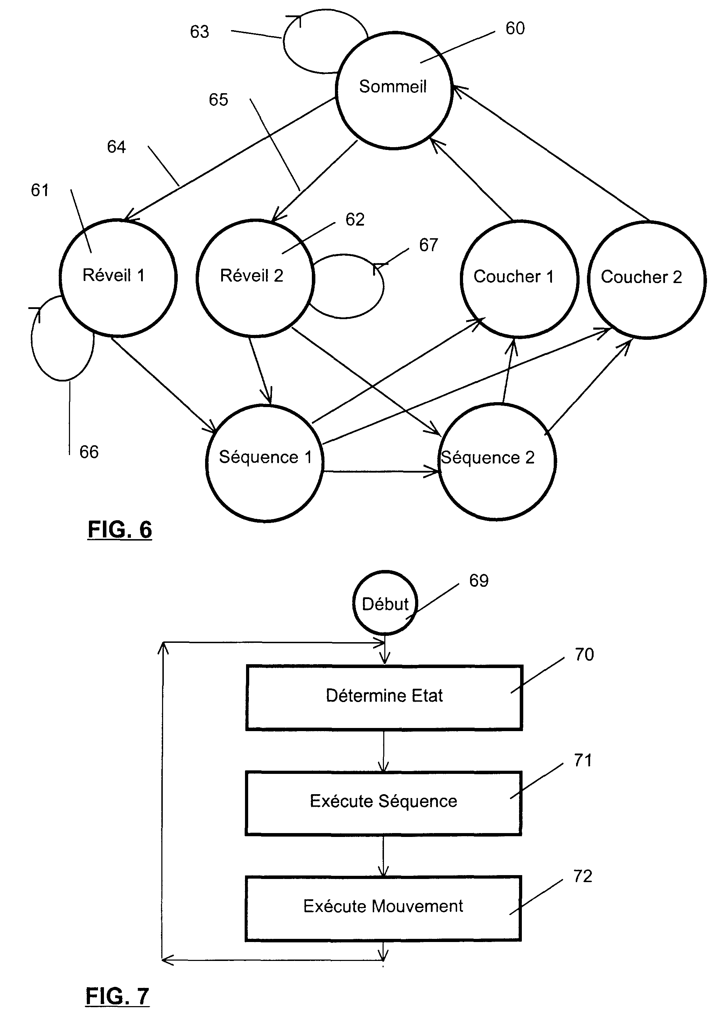

L'invention sera maintenant décrite en regard des diagrammes et organigrammes des figures 6 à 10. Dans la suite on désignera par :
- variable d'état : une combinaison logique de l'état des capteurs à un instant combinée à une ou plusieurs variables aléatoires générées par le système.
- événement : un mouvement, une attente, ou un branchement.

On appelle mouvement, une situation dans laquelle une partie de la représentation graphique évolue d'une configuration de départ vers une configuration d'arrivée dans une période de temps déterminée.

On appelle attente une période de temps pendant laquelle une partie de la représentation graphique susceptible d'être animée demeure inchangée.

On appelle branchement une commande de passage à une nouvelle séquence d'animation.

On appelle séquence d'animation une succession d'événements prédéfinis de type mouvement, attente ou branchement qui est exécutée en fonction d'une variable d'état. Une séquence, de même qu'un événement, peut être interruptible ou non. Chacun des événements d'une séquence peut être modulé par une ou plusieurs variables aléatoires.

On appelle Etat du système ou du dispositif, l'ensemble des séquences d'animation à exécuter en réponse à une variable d'état déterminée.

La figure 6 est un schéma illustrant la manière dont le système génère une variable d'état en fonction de mesures réalisées à l'aide des capteurs et d'une variable aléatoire générée par le microcontrôleur 41. Ce schéma est un diagramme d'état du type de ceux utilisé pour décrire une machine à états finis. Les cercles tels que 60, 61 et 62 représentent des états possibles du système, correspondant à l'ensemble des séquences d'animation préenregistrées pouvant être exécutées et modulées. La figure 6 présente un exemple de réalisation qui comprend sept états du système : un état de sommeil, deux états de réveil et deux de coucher, ainsi que deux états intermédiaires. Les flèches telles que 64 et 65 représentent les variables d'état qui permettent au système de sortir de l'état de sommeil, tandis que les flèches 63 et 66 définissent les variables d'états qui font que le système reste dans l'état Sommeil ou l'état de Réveil 1 respectivement.

Par exemple, si la luminosité ambiante est très faible ou nulle aux alentours du dispositif et que la variable d'état 63 est définie par la clause « SI la valeur du capteur de luminosité est 0 OU qu'elle est 1 depuis moins de 15 secondes ALORS passe en état Sommeil », le système exécutera la séquence d 'animation associée à l'état Sommeil. Selon un autre exemple, l'événement 64 est défini par la clause « SI capteur de luminosité = 1 ET variable aléatoire >= 80% ALORS passe en état Réveil 1 » et l'événement 65 est défini par la clause « SI capteur de luminosité = 1 ET variable aléatoire <80% ET observateur à moins de 3 mètres ALORS passe en état Réveil 2 ». Si une personne entre dans la pièce où se trouve le dispositif, allume la lumière et s'approche à moins de 3 mètres du dispositif, celui-ci exécutera la séquence Réveil 2 dans 80% des cas. Cet exemple illustre la manière dont une variable aléatoire, générée en cas de changement d'état de capteurs, permet de faire varier les séquences d'animation afin d'entretenir un effet de surprise et de variété.

La figure 7 montre les trois processus nécessaires à la mise en oeuvre du dispositif seton l'invention. Après une phase d'initialisation à la mise sous tension symbolisée par l'événement 69 « Début », le premier processus 70 « Détermine Etat » définit l'état du système en fonction d'une variable d'état établie en combinant l'état des capteurs à une variable aléatoire. Le second processus 71 « Exécute Séquence » interprète, exécute et module les séquences d'animation préenregistrées correspondant à l'état actuel du système. Le troisième processus 72 « Exécute Mouvement » anime les parties mobiles de la représentation graphique pilotées par le dispositif en fonction des événements envoyés par le processus 71 « Exécute Séquence ». Ces processus s'exécutent en parallèle et communiquent entre eux par le biais de variables globales, afin de permettre, si nécessaire, une mise en oeuvre quasi instantanée des mouvements en réponse aux changements d'état des capteurs. Chacun de ces trois processus est décrit plus en détails ci-dessous.

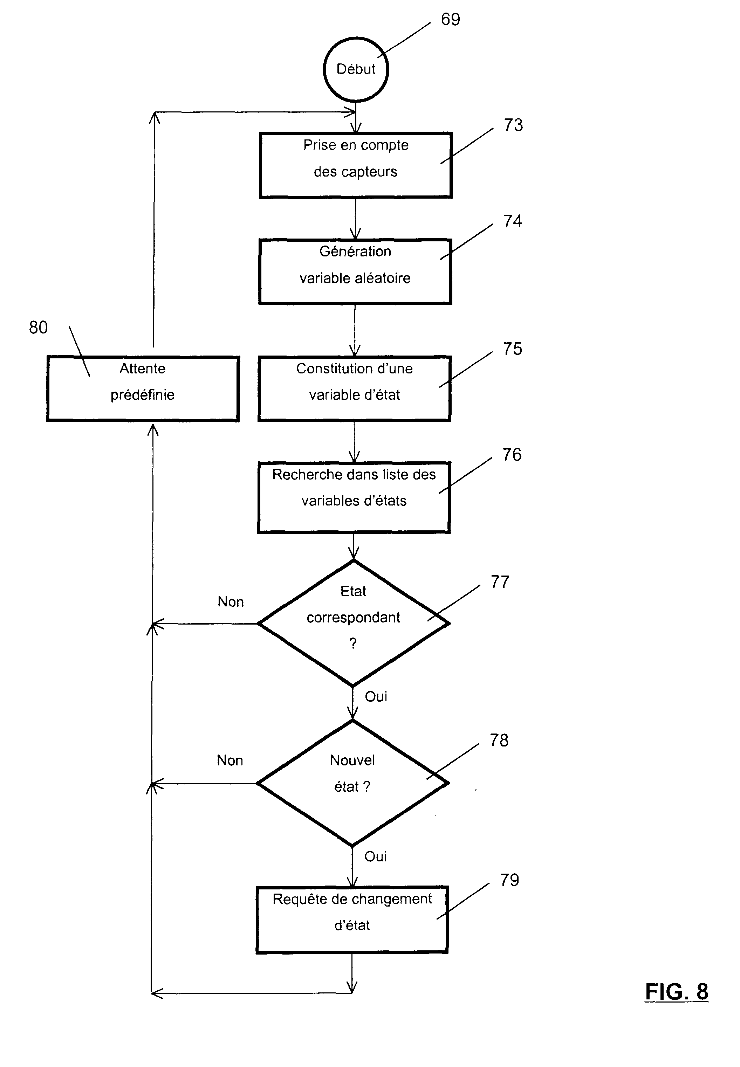

La figure 8 est un organigramme illustrant le premier processus 70 « Détermine Etat » de la figure 7. Cet organigramme illustre la manière dont une variable aléatoire est introduite dans le choix de la séquence d'animation à réaliser. L'événement 69 « Début » symbolise la phase d'initialisation exécutée à la mise sous tension du système et permettant la bonne exécution des trois processus principaux de la figure 7. L'état des différents capteurs est d'abord pris en compte à l'étape 73. Ensuite, une variable aléatoire est générée par le système en 74. Cette variable aléatoire est ensuite combinée à l'état des différents capteurs de façon à créer une variable d'état en 75. Cette variable d'état représente l'état des capteurs à un instant T combiné à la variable aléatoire générée par le système en 74.

La variable d'état ainsi créée permet de rechercher dans une liste de variables d'états prédéfinis 76 s'il existe un état correspondant à la variable d'état générée à l'étape 75 (test 77). Dans l'affirmative, à l'étape 78, le système effectue un nouveau test pour déterminer si l'état du système correspondant à la variable d'état de l'étape 75 implique un changement d'état par rapport à l'état en cours. Dans l'affirmative, une requête de changement d'état est générée en 79 et sera prise en compte par le processus 71 « Exécute Séquence ».

Après l'étape 79, le système passe à l'étape 80, qui correspond à un délai d'attente avant répétition du processus à partir de l'étape 73. De même, si la réponse aux tests 77 et 78 est négative, le système retourne à l'étape 73 après le délai d'attente 80.

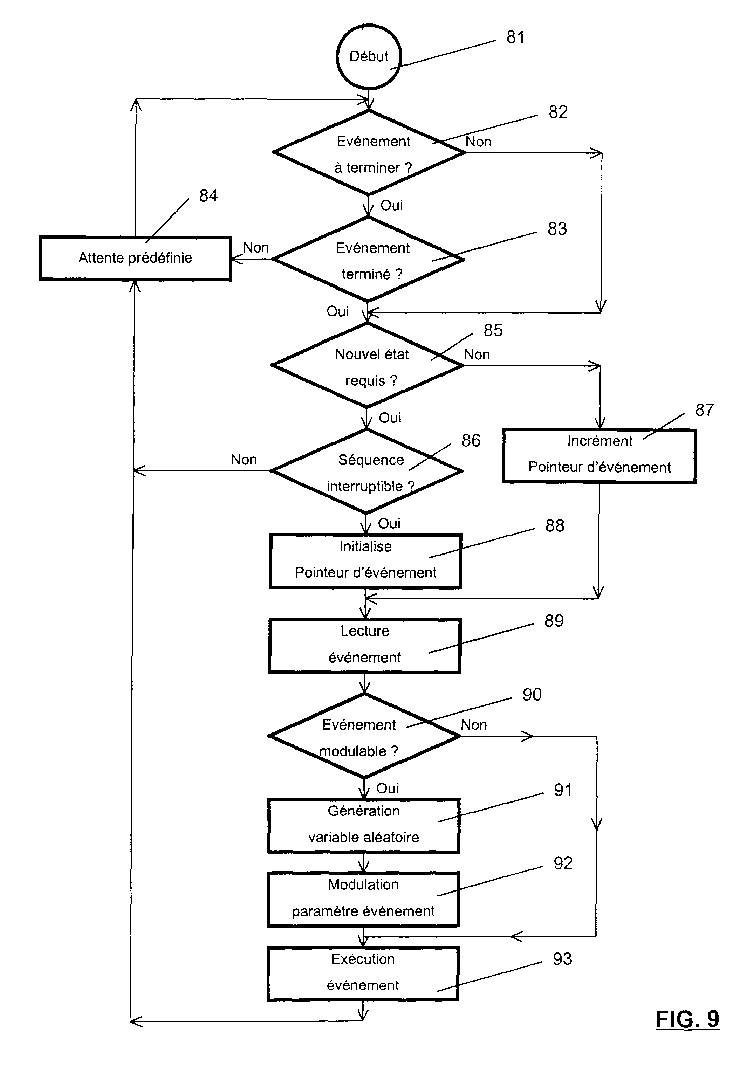

La figure 9 est l'organigramme du processus 71 « Exécute Séquence » de la figure 7. Cet organigramme illustre la gestion des séquences d 'animation ainsi que la manière dont une nouvelle variable aléatoire affecte le déroulement de la séquence d'animation en cours afin d'entretenir un effet de surprise et de découverte.

Les événements d'une séquence d'animation sont caractérisés par des paramètres qui peuvent être modifiés par une variable aléatoire. Par exemple, un mouvement est caractérisé par une position finale, une vitesse de déplacement, un profil de mouvement et un paramètre indiquant dans quelle mesure le mouvement peut être interrompu ou non pour démarrer une nouvelle séquence suite à un changement d'état du système. Chacun de ces paramètres d'un mouvement peut être modulé par une ou plusieurs variables aléatoires de façon à rendre la séquence d'animation légèrement différente à chaque exécution.

En référence à la figure 9, l'étape 81 « Début » correspond à une phase d'initialisation exécutée à la mise sous tension du système. Un premier test est effectué à l'étape 82 pour déterminer si l'événement en cours d'exécution doit être terminé avant d'exécuter le suivant. Dans l'affirmative, le test en 83 détermine si l'événement en cours est terminé. Si la réponse au test 83 est négative, le système retoume à l'étape 82 après un délai d'attente en 84. Si la réponse au test 82 est négative (l'événement en cours ne doit pas être terminé avant exécution de l'événement suivant) ou que la réponse au test 83 est positive (événement terminé), le système détermine à l'étape 85 si un nouvel état est requis. Une requête de changement d'état peut être émise à l'étape 79 de la figure 8 du processus « Détermine Etat ». Dans l'affirmative (test 85), le système détermine à l'étape 86 si la séquence en cours est interruptible. Dans la négative (teste 86), le système retoume à l'étape 82 après une attente prédéfinie en 84. Si la réponse au test 86 est positive (séquence interruptible), le système initialise un pointeur d'événement à l'étape 88 pour pointer sur le premier événement de la séquence d'animation correspondant au nouvel état du système. La lecture de l'événement à exécuter est réalisée à l'étape 89. Si la réponse au test 85 est négative (pas de changement d 'état requis), le pointeur d'événement est incrémenté à l'étape 87 pour pointer sur l'événement suivant dans la séquence d'animation en cours et la lecture de l'événement à exécuter est réalisée à l'étape 89.

A l'étape 90, le système détermine si l'événement à exécuter est modulable, c'est-à-dire si certains de ses paramètres peuvent et doivent être modifiés en fonction d'une variable aléatoire. Par exemple, les paramètres d'un événement tels que la vitesse d'un mouvement, la longueur d'une attente ou la probabilité d'un branchement sont des paramètres modulables. En cas de réponse négative au test 90, le mouvement est exécuté tel quel à l'étape 93. En cas de réponse positive au test 90 (événement modulable), une variable aléatoire est générée à l'étape 91. A l'étape 92, cette variable aléatoire est combinée aux paramètres modulables de l'événement en cours pour créer un événement de même type que celui obtenu à l'étape 89 mais dont les paramètres modulables peuvent différer. L'événement modulé ainsi crée à l'étape 92 est ensuite exécuté à l'étape 93. Dans le cas d'un mouvement, l'exécution consiste à ajouter un mouvement dans la liste des mouvements en cours, comme décrit ci-dessous. Le processus est ensuite répété à partir de l'étape 82 après une attente prédéfinie en 84.

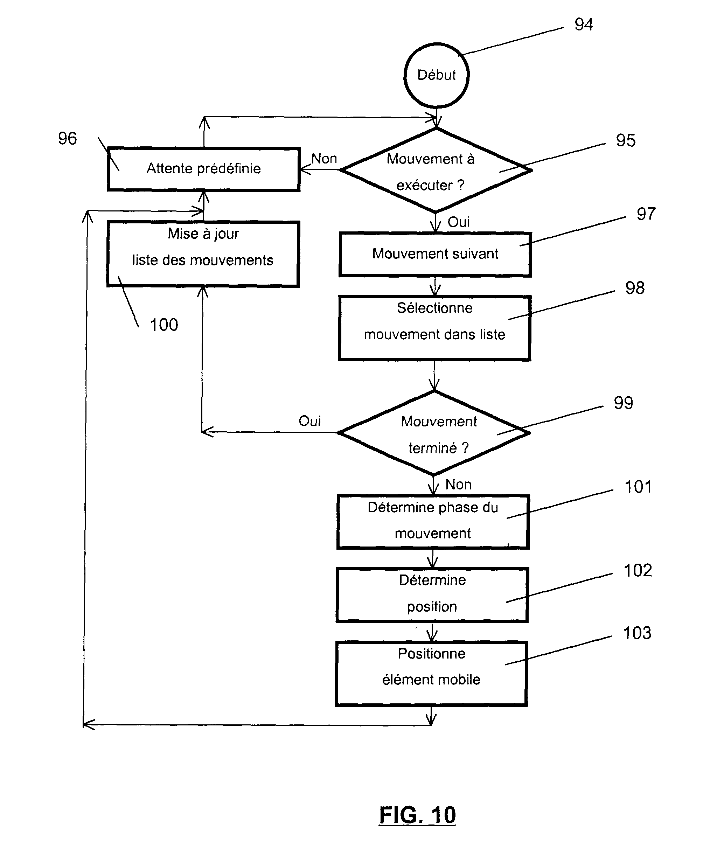

La figure 10 est l'organigramme du processus 72 « Exécute Mouvement » de la figure 7. Cet organigramme illustre comment sont réalisé les mouvements des parties mobiles d'une représentation graphique animée par le dispositif selon l'invention.

L'étape 94 « Début » symbolise la phase d'initialisation à la mise sous tension nécessaire à la bonne exécution du processus. Le système détermine d'abord à l'aide du test 95 s'il existe au moins un mouvement à exécuter. Dans la négative, il attend une période de temps définie en 96 avant de recommencer le test de l'étape 95. Dans l'affirmative, il incrémente le pointeur de mouvement en 97 pour sélectionner le mouvement à gérer dans la liste des mouvements en cours à l'étape 98. A l'étape 99, le système détermine si ce mouvement est terminé. Dans l'affirmative, il met à jour la liste des mouvements en cours à l'étape 100 et retourne à l'étape en 95 après l'attende en 96.

En cas de réponse négative du test 99 (mouvement non terminé), le système détermine dans quelle phase se trouve le mouvement à l'étape 101. La phase d'un mouvement indique s'il s'agit d'une phase d'accélération, de décélération ou de vitesse constante en fonction du profil du mouvement. A. l'étape 102, le système détermine la prochaine position que doit occuper l'élément en mouvement, en fonction de sa position actuelle, sa phase et sa vitesse. A l'étape 103, l'élément mobile correspondant au mouvement en cours est positionné à la position définie à l'étape 102. Le système attend ensuite une période de temps prédéfinie à l'étape 96 avant de recommencer le processus par l'étape 95.

Le dispositif d'animation pour représentations graphiques ou plastiques décrit ci-dessus fonctionne de manière autonome en fonction des paramètres fournis par les capteurs et de la ou des variables aléatoires générées par le processeur 44.

Il est également possible de faire communiquer entre eux plusieurs dispositifs d'animation du type décrit ci-dessus comportant des représentations différentes ou non, grâce à des moyens de communication câblés ou sans fils. A cet effet, le microcontrôleur 41 de chaque dispositif est alors équipé d'une interface de communication 55 comme représenté en traits mixtes aux figures 4 et 5. Un tel agencement permet de réaliser un système constitué de plusieurs dispositifs dont les représentations graphiques ou plastiques de certains sont asservies au moyen de leur microcontrôleur 41 à celles d'un ou plusieurs autres dispositifs, et par conséquent synchronisées en fonction de l'état de ce ou ces autres dispositifs. Par exemple, l'un des dispositifs peut être un dispositif maître, les autres étant des dispositifs esclaves.

Il va de soi que les modes de réalisation décrits ne sont que des exemples et l'on pourrait les modifier sans sortir pour cela du cadre de l'invention. Ainsi, bien que la forme de réalisation de l'invention décrite ci-dessus soit illustrée par une représentation graphique ou picturale en deux dimensions, le dispositif et le système selon l'invention peuvent être appliqués à des représentations plastiques en trois dimensions telles que la sculpture.

## Revendications

1. Dispositif d'animation d'une représentation graphique ou plastique, comprenant des moyens de support de ladite représentation, des moyens d'animation pour faire varier ladite représentation, au moins un capteur pour détecter la présence d'un individu dans un champ donné de vision desdits moyens de support et pour générer au moins un paramètre représentatif de déplacements et/ou mouvements d'un individu dans ledit champ, et des moyens pour commander lesdits moyens d'animation en fonction dudit paramètre en réponse à la détection dudit individu, **caractérisé en ce que** ledit dispositif comprend des moyens pour générer au moins une variable aléatoire, et **en ce que** lesdits moyens de commande (41) comprennent des moyens (44) pour combiner ladite variable aléatoire avec ledit paramètre de manière à commander des variations non déterministes de ladite représentation en réponse auxdits déplacements et/ou mouvements.

2. Dispositif selon la revendication 1, **caractérisé en ce que** ledit capteur (36-38) comprend des moyens (38) de mesure de la distance d'un individu détecté auxdits moyens de support.

3. Dispositif selon l'une quelconque des revendications 1 et 2, **caractérisé en ce que** ledit capteur (36-38) est un capteur à ultrason.

4. Dispositif selon l'une quelconque des revendications 1 à 3, **caractérisé en ce qu'**il comprend une pluralité de capteurs (30, 32, 34, 36, 37, 39), des moyens (31, 33, 35, 38, 40) pour générer plusieurs paramètres en fonction de signaux délivrés par lesdits capteurs, et des moyens (44) pour générer une variable d'état en cours dudit dispositif en fonction desdits paramètres et de ladite variable aléatoire, lesdits moyens de commande (41) commandant lesdits moyens d'animation (1-3 ; 54) en fonction de ladite variable d'état en cours.

5. Dispositif selon la revendication 4, **caractérisé en ce que** lesdits capteurs comprennent l'un au moins d'un capteur de luminosité (30) et d'un capteur sonore (32) adaptés respectivement pour mesurer la luminosité ambiante et détecter des sons dans un champ dans lequel est placé ledit dispositif.

6. Dispositif selon l'une quelconque des revendications 4 et 5, **caractérisé en ce que** lesdits moyens de commande (41) comprennent des moyens (47) de mémorisation d'une liste prédéfinie de variables d'états, lesdits moyens de commande (41) étant adaptés pour commander sélectivement lesdits moyens d'animation (1-3 ; 54) en fonction de la présence ou de l'absence de ladite variable d'état en cours dans ladite liste.

7. Dispositif selon la revendication 6, **caractérisé en ce que** lesdits moyens de commande (41) comprennent des moyens (71) pour produire une séquence prédéfinie d'animation desdits moyens d'animation (1-3 ; 54) en fonction de ladite variable d'état et pour moduler sélectivement le déroulement de ladite séquence d'animation en fonction d'au moins une variable aléatoire.

8. Dispositif selon la revendication 7, **caractérisé en ce que** lesdits moyens de commande (41) comprennent des moyens (86) pour commander sélectivement l'interruption d'une séquence d'animation en cours en réponse à une variation de ladite variable d'état.

9. Dispositif selon l'une quelconque des revendications 1 à 8, **caractérisé en ce que** lesdits moyens de commande (41) sont adaptés pour commander lesdits moyens d'animation (1-3; 54) en fonction du temps depuis lequel lesdits moyens d'animation (1-3 ; 54) sont placés dans une configuration donnée.

10. Dispositif selon l'une quelconque des revendications 1 à 9, **caractérisé en ce que** lesdits moyens de support comprennent au moins un support fixe (1) d'une représentation graphique d'arrière-plan et au moins un support mobile (2, 3) d'une représentation graphique de premier plan, et **en ce que** lesdits moyens d'animation comprennent des moyens (9, 15) de déplacement dudit support mobile (2, 3) de représentation de premier plan par rapport audit support fixe (1) de représentation d'arrière-plan.

11. Dispositif selon l'une quelconque des revendications 1 à 9, **caractérisé en ce que** lesdits moyens de support comprennent un écran (54) d'affichage d'image vidéo et **en ce que** lesdits moyens d'animation comprennent des moyens de traitement de ladite image vidéo.

12. Système d'animation de représentations graphiques ou plastiques, **caractérisé en ce qu'**il comprend plusieurs dispositifs d'animation de représentations graphiques ou plastiques selon l'une quelconque des revendications 1 à 11, des moyens (55) de communication entre lesdits dispositifs, et des moyens (41, 55) pour commander les moyens d'animation (1-3 ; 54) d'au moins une partie desdits dispositifs en fonction de l'état des moyens de commande (41) d'au moins l'un desdits dispositifs.

## Claims

1. Device for animating a graphical or plastic representation, comprising support means for said representation, animation means for varying said representation, at least one sensor for detecting the presence of a person in a given field of view of said support means and for generating at least a parameter representative of movements and/or gestures of a person in said field and means for controlling said animation means according to said parameter in response to the detection of a person, **characterized in that** said device includes means for generating at least one random variable and **in that** said control means (41) include means (44) for combining said random variable with said parameter to command non-deterministic variations of said representation in response to said movements and/or gestures.

2. Device according to claim 1 **characterized in that** said sensor (36-38) includes means (38) for measuring the distance of a detected person from said support means.

3. Device according to either claim 1 or claim 2 **characterized in that** said sensor (36-38) is an ultrasound sensor.

4. Device according to any of claims 1 to 3 **characterized in that** it includes a plurality of sensors (30, 32, 34, 36, 37, 39), means (31, 33, 35, 38, 40) for generating a plurality of parameters according to signals delivered by said sensors and means (44) for generating a current state variable of said device according to said parameters and said random variable, said control means (41) controlling said animation means (1-3; 54) according to said current state variable.

5. Device according to claim 4 **characterized in that** said sensors comprise at least one of a brightness sensor (30) and of a sound sensor (32) respectively adapted to measure the ambient brightness and to detect sound in a field in which said device is placed.

6. Device according to any of either claim 4 or claim 5 **characterized in that** said control means (41) comprise means (47) for storing a predefined list of state variables, said control means (41) being adapted to control said animation means (1-3; 54) selectively according to the presence or absence of said current state variable in said list.

7. Device according to claim 6 **characterized in that** said control means (41) include means (71) for producing a predefined sequence of animation of said animation means (1-3; 54) according to said state variable and for selectively modifying the execution of said animation sequence according to at least one random variable.

8. Device according to claim 7 **characterized in that** said control means (41) include means (86) for selectively interrupting an animation sequence in progress in response to variation of said state variable.

9. Device according to any of claims 1 to 8 **characterized in that** said control means (41) are adapted to control said animation means (1-3; 54) according to the time since said animation means (1-3; 54) were placed in a given configuration.

10. Device according to any of claims 1 to 9 **characterized in that** said support means comprise at least one fixed support (1) of a background graphical representation and at least one movable support (2, 3) of a foreground graphical representation and **in that** said animation means comprise means (9, 15) for moving said foreground representation movable support (2, 3) relative to said background representation fixed support (1).

11. Device according to any of claims 1 to 9 **characterized in that** said support means comprise a screen (54) for displaying a video image and **in that** said animation means include means for processing said video image.

12. System for animating graphical or plastic representations **characterized in that** it comprises a plurality of devices for animating graphical or plastic representations according to any of claims 1 to 11, means (55) for enabling communication between said devices and means (41, 55) for controlling the animation means (1-3; 54) of at least some of said devices according to the state of the control means (41) of at least one of said devices.

## Patentansprüche

1. Animationsvorrichtung für eine graphische oder plastische Darstellung, mit einer Stützeinrichtung für die Darstellung, einer Animationseinrichtung zum Verändern der Darstellung, wenigstens einem Sensor zum Erkennen der Anwesenheit eines Individuums in einem bestimmten Sichtfeld der Stützeinrichtung und zum Erzeugen wenigstens eines Parameters, welcher Verschiebungen und/oder Bewegungen eines Individuums in dem Feld wiedergibt, und einer Einrichtung zum Steuern der Animationseinrichtung in Abhängigkeit von dem Parameter in Reaktion auf das Erkennen des Individuums, **dadurch gekennzeichnet, daß** die Vorrichtung eine Einrichtung zum Erzeugen wenigstens einer Zufallsvariablen aufweist, und daß die Steuereinrichtung (41) eine Einrichtung (44) aufweist, welche die Zufallsvariable derart mit dem Parameter kombiniert, daß die nicht deterministischen Variationen der Darstellung in Reaktion auf die Verschiebungen und/oder Bewegungen gesteuert werden.

2. Vorrichtung nach Anspruch 1, **dadurch gekennzeichnet, daß** der Sensor (36-38) eine Einrichtung (38) zum Messen der Entfernung eines erfassten Individuums von der Stützeinrichtung aufweist.

3. Vorrichtung nach einem der Ansprüche 1 und 2, **dadurch gekennzeichnet, daß** der Sensor (36-38) ein Ultraschallsensor ist.

4. Vorrichtung nach einem derAnsprüche 1 bis 3, **dadurch gekennzeichnet, daß** sie mehrerer Sensoren (30, 32, 34, 36, 37, 39), Einrichtungen (31, 33, 35, 38, 40) zum Erzeugen mehrerer Parameter in Abhängigkeit von Signalen der Sensoren, und eine Einrichtung (44) zum Erzeugen einer geltenden Zustandsgröße der Vorrichtung in Abhängigkeit von den Parametern und der Zufallsvariablen aufweist, wobei die Steuereinrichtung (41) die Animationseinrichtung (1-3; 54) in Abhängigkeit von der geltenden Zustandsgröße steuert.

5. Vorrichtung nach Anspruch 4, **dadurch gekennzeichnet, daß** die Sensoren wenigstens einen Helligkeitssensor (30) oder einen Schallsensor (32) aufweisen, der in der Lage ist, die Umgebungshelligkeit bzw. Töne in einem Bereich zu erkennen, in dem die Vorrichtung angeordnet ist.

6. Vorrichtung nach einem der Ansprüche 4 und 5, **dadurch gekennzeichnet, daß** die Steuereinrichtung (41) eine Einrichtung zum Speichern einer vordefinierten Liste von Zustandsgrößen aufweist, wobei die Steuereinrichtung (41) zum selektiven Steuern der Animationseinrichtung (1-3; 54) in Abhängigkeit von dem Vorhandensein oder der Abwesenheit der geltenden Zustandsgröße in der Liste ausgebildet ist.

7. Vorrichtung nach Anspruch 6, **dadurch gekennzeichnet, daß** die Steuereinrichtung (41) eine Einrichtung (71) zum Erzeugen einer vordefinierten Animationssequenz derAnimationseinrichtung (1-3; 54) in Abhängigkeit von der Zustandsgröße und zum selektiven Modulieren des Ablaufs der Animationssequenz in Abhängigkeit von wenigstens einer Zufallsvariablen aufweist.

8. Vorrichtung nach Anspruch 7, **dadurch gekennzeichnet, daß** die Steuereinrichtung (41) eine Einrichtung (86) zum selektiven Steuern der Unterbrechung einer momentanen Animationssequenz in Reaktion auf eine Veränderung der Zustandsgröße aufweist.

9. Vorrichtung nach einem der Ansprüche 1 bis 8, **dadurch gekennzeichnet, daß** die Steuereinrichtung (41) in der Lage ist, die Animationseinrichtung (1-3; 54) in Abhängigkeit von dem Zeitpunkt zu steuern, seit welchem die Animationseinrichtung (1-3; 54) in eine bestimmte Konfiguration versetzt ist.

10. Vorrichtung nach einem der Ansprüche 1 bis 9, **dadurch gekennzeichnet, daß** die Stützeinrichtung wenigstens eine feste Stütze (1) für eine graphische Hintergrunddarstellung und wenigstens eine bewegbare Stütze (2, 3) für eine graphische Vordergrunddarstellung aufweist, und daß die Animationseinrichtung Einrichtungen (9, 15) zum Verschieben der bewegbaren Stütze (2,3) der Vordergrunddarstellung in bezug auf die feste Stütze (1) der Hintergrunddarstellung aufweist.

11. Vorrichtung nach einem der Ansprüche 1 bis 9, **dadurch gekennzeichnet, daß** die Stützeinrichtung einen Videoanzeigebildschirm (54) aufweist, und daß Animationseinrichtung eine Einrichtung zum Bearbeiten des Videobildes aufweist.

12. System zur Animation graphischer oder plastischer Darstellungen, **dadurch gekennzeichnet, daß** es mehrere Vorrichtungen zurAnimation graphischer oder plastischer Darstellungen nach einem der Ansprüche 1 bis 11, Kommunikationseinrichtungen (55) zwischen den Vorrichtungen und Einrichtungen (41, 55) zum Steuern der Animationseinrichtung (1-3; 54) mindestens eines Teils der Vorrichtungen in Abhängigkeit vom Zustand der Steuereinrichtung (41) wenigstens einer der Vorrichtungen aufweist.
